# EUROPEAN PATENT APPLICATION

(11) **EP 4 186 373 A1**
(43) Date of publication of application: **31.05.2023**
(21) Application number: 22161130.4
(22) Date of filing: 09.03.2022
(51) Int. Cl.: A23J 3/22, A23P 30/10, A22C 7/00

(54) **DEVICE AND METHOD FOR FORMING A PRODUCT THAT IMITATES PROPERTIES OF MEAT, POULTRY, FISH, SEAFOOD, DAIRY PRODUCTS, OR PRODUCTS DERIVED THEREFROM**

(30) Priority: 30.11.2021 EP 21211396; 23.12.2021 EP 21217503; 10.02.2022 EP 22156034
(71) Applicant: Bühler AG, 9240 Uzwil (CH)
(72) Inventor: Roberts, Ian David, 9524 Zuzwil (CH); Georget, Erika Sylvie, 8041 Zürich (CH)
(74) Representative: Hepp Wenger Ryffel AG

(57) **Abstract**

The present invention is related to a method for the manufacture of a product that imitates properties of meat, poultry, fish, seafood, dairy products such as cheese or yoghurt, or products derived therefrom, comprising the step of dosing and depositing a first and optionally a second material onto a surface, preferably in a cavity (19), of a product carrier (16), preferably a mold, wherein at least one said first material and second material comprises a protein, preferably a vegetable protein, insect protein, cell protein including single cell protein, such as of yeast, bacteria, microalgae, fungi, fermented products, mold and the like, or a mixture of different proteins, wherein the protein content in the dry raw materials is 35 to 90%, preferably greater than 50 % and is particularly preferably in the range from 60 % to 90 %.

## Description

The present invention is related to products that imitate properties of meat, poultry, fish, seafood, dairy products such as cheese or yoghurt, or products derived therefrom, as well as to a device and method for manufacturing the same.

Innovative food products, such as products that imitate properties of meat, poultry, fish, seafood, dairy products such as cheese or yoghurt, or products derived therefrom, that are based on vegetable proteins are becoming increasingly important as part of the sustainability trend.

A major challenge for the acceptance of such products is to match their texture, their nutrition quality, their color and their organoleptic properties (bite) as far as possible to the corresponding properties of real meat, poultry, or fish and seafood products, or dairy products such as cheese or yoghurt. However, products produced using the known methods and methods available on the market differ significantly from real meat in their texture, their nutrition quality, their color and their bite. This applies to the fibrousness as well as the tenderness or juiciness. In general, each innovative food product faces the same challenges as to texture, nutrition quality, color and bite, in order to ensure consumer acceptance.

A typical product that imitates properties of meat, poultry, fish, seafood, dairy products such as cheese or yoghurt, or products derived therefrom, is made using a vegetable protein by a method wherein the raw materials (including the vegetable (plant-based) protein) are weighed/dosed and mixed, optionally preconditioned, and subsequently processed in an extruder. Preferably, the thus obtained product is led out of the extruder through a cooling die and cut.

This is a very high-energy process in which thermal energy (heating the extruder housing and cooling water in a cooling die or introduction of steam into the extruder) and mechanical energy (specific mechanical energy input) are introduced. However, an increased supply of energy in the process inevitably leads to a stronger texturing, which in turn has a negative effect on the bite or the tenderness of the end product - the products have a rubber-like character.

In WO 2021/032866 A1, a method was described which results in the production of a foamed product that has improved characteristics over known food products that imitate properties of meat and fish.

With the above manufacturing processes, it is not possible to obtain a product that imitates properties of meat, poultry, fish, seafood, dairy products such as cheese or yoghurt, or products derived therefrom, in all desired textures. For example, layered structures or core-shell structures cannot be made therewith.

It was the problem of the present invention to provide a product that imitates properties of meat, poultry, fish, seafood, dairy products such as cheese or yoghurt, or products derived therefrom, that overcomes the problems discussed above, in particular to provide a product that imitates properties of meat, poultry, fish, seafood, dairy products such as cheese or yoghurt, or products derived therefrom, with specific textures such as layered structures or core-shell structures, as well as a device and method for manufacturing the same.

The above problem has been solved by the present invention.

In detail, the present invention is related to a method for the manufacture of a product that imitates properties of meat, poultry, fish, seafood, dairy products such as cheese or yoghurt, or products derived therefrom, comprising the steps:
a) dosing and depositing a first material onto a surface, preferably in a cavity, of a product carrier, preferably a mold, so as to obtain a first deposit in a desired shape;
b) solidifying said first deposit so that the first deposit has a self-containing structure;
c) optionally processing the first deposit,
d) releasing said product from said product carrier, so as to obtain said product that imitates properties of meat, poultry, fish, seafood, or products derived therefrom, ;
wherein said first material comprises a protein, preferably a vegetable protein, insect protein, cell protein including single cell protein, such as of yeast, bacteria, microalgae, fungi, fermented products, mold and the like, or a mixture of different proteins, wherein the protein content in the dry raw materials is 35 to 90%, preferably greater than 50 % and is particularly preferably in the range from 60 % to 90 %.

According to a preferred embodiment of the method according to the present invention, the method comprises, before step b) or c), the steps of
depositing a second material onto or into a product support, preferably into said cavity, of said product carrier, preferably a mold, so as to obtain a second deposit in a desired shape, wherein said step of dosing and depositing said second material is performed simultaneously with the step of dosing and depositing said first material, or after the step of depositing or solidifying said first deposit, and optionally solidifying said second deposit together with or after said step of solidifying said deposit, so that the second deposit has a self-containing structure,
wherein preferably said second material comprises a protein, preferably a vegetable protein, insect protein, cell protein including single cell protein, such as of yeast, bacteria, microalgae, fungi, fermented products, mold and the like, or a mixture of different proteins, wherein the protein content in the dry raw materials is 35 to 90%, preferably greater than 50 % and is particularly preferably in the range from 60 % to 90 %.

According to a further preferred embodiment of the method according to the present invention, the method comprises a step of repeating the steps of dosing and depositing and solidifying further deposits of the same or different materials as the first and/or second material onto or into a product support, preferably into said cavity, of said product carrier.

According to a further preferred embodiment of the method according to the present invention, the method comprises a step of optionally processing the first deposit (or any subsequent deposit). This may include conventional processing steps, such as cooling, heating, or compressing the deposit, using suitable equipment such as the modules described below. For example, compressing a deposit may be performed using a component such as a solid ball that is pressed against the deposit.

With the method according to the present invention, it is possible to manufacture a product that imitates properties of meat, poultry, fish and seafood, dairy products such as cheese or yoghurt, and products derived therefrom, and which has a specific structure. With a preferred embodiment of the method according to the present invention, it is possible to manufacture a product that has a layered structure, by sequentially depositing layers of different materials on top of each other.

For dosing and depositing, the materials have to exhibit a viscosity in the range from 1,0016 mPas (at 20°C) to 20000 Pas (at 20°C), as measured by a standard rheometer. Preferably, the material to be dosed and deposited is a homogeneous system.

It is furthermore possible to manufacture a product that has a specific textured structure, by deposition of the material(s) in a desired pattern.

In the method of the present invention, one or more materials are dosed and deposited, onto a surface, preferably in a cavity, of a product carrier, preferably a mold.

According to the present invention, a product carrier may be any device that is capable of carrying a deposited material. Such product carriers are known. For example, said product carrier may be a conveying belt, or a product carrier comprising a cavity, such as mold. According to the present invention, said product carrier comprises a surface on which material can be deposited. Said surface may be, for example, the upper surface of a conveying belt or a surface in a cavity of a mold. The preferred kind of product carriers and/or surfaces will be discussed below.

According to the present invention, the material is deposited in a desired shape. This may be achieved, for example, by depositing the material into a cavity of a mold, so that the material takes the form provided by said cavity. Alternatively, this may be achieved by guiding a depositing unit such as a nozzle along a predetermined path, so that the material is deposited along said path in a desired structure.

According to the present invention, the deposited material (i.e. the deposit) is solidified so that the respective deposit has a self-containing structure. This means that the deposit is brought into a state where it maintains the desired shape, i.e. does not show any flow behaviour that would prevent the deposit from maintaining its deposited shape.

According to the present invention, the term "solidifying" also comprises a transition of the material into a gel state. Gels are known in the art and are characterized as being in a semisolid state.

According to the present invention, the term "solidifying" comprises typical methods of solidifying a material, such as cooling below the freezing point of the material, cooling below the sol-gel transition point, drying by e.g. heating the material, or solidifying a thixotropic material by releasing any exerted forces applied thereon during deposition.

According to one embodiment of the present invention, the step of dosing and depositing a material precedes the step of solidifying said deposited material. According to one embodiment of the present invention, especially in the case of thixotropic materials the step of dosing and depositing a material is carried out essentially simultaneously with the step of solidifying said deposited material, since once the thixotropic material has left the depositing device, no shear forces act any longer on said material, so that the thixotropic material essentially instantaneously solidifies.

According to one preferred embodiment of the present invention, dosing and depositing can be achieved with a depositing machine.

Depositing machines serve for dosing and depositing a free-flowing foodstuff material onto a surface, preferably into cavities of a product carrier such as a mold. Depositing machines are generally known in the art and may, for example, comprise a 3D printing device or any of the depositing machines that will be explained below.

Depositing machines for dosing and depositing a free-flowing foodstuff material onto a surface of a product carrier, preferably into cavities of a mold, typically comprise a tank for receiving the free-flowing material, and a depositing assembly which is most often disposed below the tank. The tank and the depositing assembly are typically disposed on or within a machine frame to which motors and drive means for operating the depositing machine are attached. The tank serves as a material container. Said tank may have a stirring unit which comprises a horizontally or vertically aligned shaft. A screw conveyor having a vertically or horizontally aligned shaft, and/or a pump device, by means of which the material to be deposited is moved to the depositing assembly may also be provided. Pressure may be applied on the tank, for example if and when it is used for producing aerated products. The tank is typically temperature controllable, i.e. thermo-regulated.

According to a preferred embodiment of the present invention, the method is carried out with a with a depositing machine having:
- at least one tank which contains said material for deposition and which is equipped with a stirring device for stirring said material in said tank;
- a depositing assembly which is located below the tank and comprises at least one row of pistons which perform an intake cycle, so as to draw said material out of said tank, and an exhaust cycle, so as to expel the drawn material; and at least one dispensing device which rotates between a first position, so as to receive the material that has been drawn by the pistons, and a second position which enables an outflow of the material that is expelled by the pistons;
- a motor for rotating the dispensing device;
- actuation means for moving the pistons in a reciprocal manner, wherein the actuation means are releasably connected to the pistons; and
- a machine frame which carries the motor and comprises two arms which project along respective parallel horizontal axes and are equipped with the actuation means;
wherein the tank and the depositing assembly form part of a module which is removable in one piece from the frame, and the module is releasably connected to the motor and is equipped with a further frame, and the further frame in the machine frame is fastened by way of a plug-in connection which is disposed in a substantially horizontal manner.

The depositing assembly typically comprises pumping means and/or metering means by way of which portions of the material are delivered from the depositing machine, i.e. dosed. Said portions of the material are delivered to a product carrier located below the depositing machine, for example to molds which may be conveyed to the depositing machine and away therefrom on a belt. The pumping and/or metering means may be a horizontal pair of gear wheels, vertically aligned metering pistons, horizontally aligned rotary-valve pistons, or a combination of preferably horizontal pump pistons and rotary valves.

According to the present invention, the product carrier, for example mold, is made of a food-grade material to which the material to be processed according to the present invention does not adhere. For example, the product carrier, for example mold, may be made of a food-grade silicone material. Alternatively, the product carrier, for example, mold, may contain a surface that enables easy removability of a product formed therein. Suitable surfaces are known in the art. For example, reference may be made to a polished (smooth) surface.

According to a preferred embodiment of the present invention, a single mold or a double mold (i.e. a mold comprising two halves which can be disassembled) can be used. A double mold can be used for making products having a desired three-dimensional shape. According to the present invention, in the broadest sense a three-dimensional shape covers a material layer includes a layer thickness and a planar extension in at least two different directions.

Most often, the depositing machines include nozzle plates having a multiplicity of nozzles which may be closed off by flexible nozzle flaps, by a blade-type mouth piece, or by a closure slide. The latter are attached to a closure plate which is disposed below the nozzle plate, for example.

The machine frame may be fixedly attached in relation to further component parts of a depositing plant, or may itself be movably mounted such that, for example, the depositing machine may be conjointly moved with the molds along a specific distance, or that the entire depositing machine together with all motors and drives may be moveable from an operating position to a maintenance position.

In the art, there are also known depositing machines where the depositing assembly can be inserted into and moved out of the machine frame, for example for cleaning purposes. This is known from WO 2015/162114 A1 and not described in detail here.

A preferred depositing machine suitable for the present invention comprises at least one tank which contains a product for depositing and which is equipped with a stirring device for stirring the product in said tank. The tank may be a container for the intermediate storing of the material, or be a supply line having distributors by way of which the material is guided from a remote container, and/or from a container disposed outside the depositing machine, to the depositing assembly.

The depositing machine has a depositing assembly which is located below the tank. The depositing assembly comprises at least one row of horizontal pistons which perform an intake cycle, so as to draw product from the tank, and an exhaust or metering cycle, so as to expel the acquired product. The depositing assembly moreover comprises at least one dispensing device which rotates between a first position, so as to receive the product that has been acquired by the pistons, and a second position which enables an outflow of the product that is expelled by the pistons. The depositing assembly preferably comprises a multiplicity of nozzles.

The depositing machine preferably has a motor for rotating the dispensing device, and actuation means for moving the pistons in a reciprocal manner, wherein the actuation means are releasably connected to the pistons.

The depositing machine has a machine frame which may carry the motor and comprises two arms which project along respective parallel horizontal axes and are equipped with actuation means. The frame may be designed so as to be horizontally encircling or may be designed in a U-shape, being open towards one side. The arms are parts of the frame that lie so as to be opposite one another, the module comprising the tank and the depositing assembly in a fitted state being disposed there between.

Preferably, the module is movable in the frame, between the arms, along an axis that runs substantially parallel to the axes of the arms.

The tank and the depositing assembly form part of a module which is removable in one piece from the frame. The module herein is releasably connected to the motor. The tank and the depositing assembly may form a constructive unit and/or be mutually connected in a releasable manner.

The module may be equipped with a further frame. The further frame may be integrally connected to the tank or to the depositing assembly, or a separate frame to which the tank and/or the depositing assembly are fastened is provided. The further frame may completely encompass the tank and/or the depositing assembly, or be open towards one side.

Preferably, the further frame is fastened to the machine frame by way of a form-fitting plug-in connection, in particular a bolt connection, which is disposed in a substantially horizontal manner. "Horizontal" as used herein refers to the floor on which the depositing machine is provided. In particular, the plug-in connection may be aligned along an axis which runs substantially parallel with the axes of the arms of the frame, along which axes the module is preferably movable in the frame.

As used herein, an operative connection between a projecting member and a corresponding clearance is referred to as a plug-in connection, wherein the projecting part is guidable into the clearance along an axis, and wherein the clearance at least in portions completely surrounds the projecting member in the fitted state such that a form-fit results. If and when the depositing frame and the component have the alignment thereof as per the intended use, the axis is disposed in particular in a substantially horizontal manner, that is to say that the axis is not vertically aligned and lies on the horizontal, or, with the horizontal, encloses a minor angle, in any case an angle of less than 90°, in particular of less than 45°. The plug-in connection may be established by way of a screw and a screw hole; however, the projecting member is preferably moved to the terminal position in the clearance without rotation. Therefore, the plug-in connection is preferably embodied as a bolt connection, wherein the plug-in connection comprises at least one bolt hole, in particular a blind hole or a through hole, on the one hand, and at least one bolt which in the fitted state is disposed in the latter, on the other hand.

In one preferred embodiment of the invention, the depositing machine comprises at least one motor and actuation means for actuating the depositing assembly, wherein the motor and the actuation means are disposed on the machine frame, wherein the tank and/or the depositing assembly individually, or the tank and the depositing assembly as a module in one piece is/are removable from the motor and the actuation means. The typically heavy drive technology may thus remain on the machine frame for cleaning and maintenance purposes and need not be removed conjointly with the components.

According to another preferred embodiment, the depositing assembly comprises a multiplicity of nozzles.

Moreover, at least one valve plate may be associated with the depositing assembly. The depositing assembly may also have one or a plurality of nozzle plates by way of which variable depositing patterns may be produced.

Moreover, the depositing assembly may have a closure plate on which blades or slides are provided, by way of which the nozzles are closed or the exiting jet of material is cut off, so as to prevent post-dripping.

Moreover, the depositing assembly may be composed of depositingassembly modules which may be variably assembled to form depositing assemblies each having different depositing patterns and/or different conveying rates.

In one preferred embodiment, the tank has at least one stirring device which in particular is releasably connectable to a stirring-unit motor which is disposed on the machine frame. In the case of the tank being removed, the actuation means for the stirring device may remain on the machine frame. The stirring device may be equipped with a horizontally disposed or a vertically disposed shaft.

The tank may have a plurality of stirring devices and moreover be sub-dividable into compartments such that dissimilar materials may be held in one tank and be brought together only during depositing, so as to produce filled, layered, patterned, and/or marbled foodstuffs.

Further actuation means which transmit a force from a motor to the depositing assembly, in particular to horizontally disposed pistons, may be provided on the machine frame, for example in the region of the arms. Said further actuation means may be gear racks, timing belts, or eccentric drives, for example. These actuation means preferably are also releasably connectable to the depositing assembly and upon removal of the depositing assembly from the machine frame may remain on the machine frame.

According to another preferred embodiment of the present invention, dosing and deposition of the material(s) is carried out by extruding said material(s), preferably through a cooling die of an extruder while cooling the extrudate to a temperature of less than 100 °C, onto said surface, preferably into said cavity. Extrusion can also be carried out through a cylindrical hole that opens directly into the depositing machine described above, more specifically the depositing assembly thereof. A desired texturisation may be generated with controlled extrusion.

Extrusion of protein-containing compositions is known. Reference is made, for example, to WO 2021/032866 A1. Briefly, a suitable raw material is metered into an extruder, mixed in the extruder to produce a mixture, extruded out of the extruder to produce an extrudate, and led out of through the cooling die while cooling the extrudate to a temperature of less than 100 °C.

As described in WO 2021/032866 A1, pores may be formed in a controlled manner in the extrudate by providing a gas in the extruder, so as to obtain a foamed product. The provision of said gas may be achieved by introducing this gas, preferably selected from the group consisting of CO₂, N₂, N₂O or SO₂, into the extruder.

According to a co-pending application EP 21211396.3 of applicant, it is possible to insert cellular material that would be adversely affected by applied extrusion conditions into the extrudate in a region of the extruder in the vicinity of the extruder exit to the outlet of the cooling die, preferably between the exit of the extruder and the outlet of the cooling die.

In both variants, the material is deposited onto a surface, preferably into a cavity, of a product carrier, preferably a mold, through an outlet, preferably a nozzle.

According to the present invention it is possible to move said outlet relative to the product carrier so as to achieve a controlled deposition of material in said cavity. For example, the outlet or the product carrier may be moved along a zig-zag path, resulting in a corresponding deposition of material zig-zag pattern. If for example a first material layer is deposited in a first zig-zag pattern, followed by deposition of a second material layer in a second zig-zag pattern that is rotated by 90° relative to the first zig-zag pattern, and optionally a third deposition of material zig-zag pattern. If for example a first material layer is deposited in a third zig-zag pattern corresponding to the first zig-zag pattern, and so on, specifically textured products may be obtained. This resembles a printing process and may thus be designated as printing of products.

The movement of said outlet or of said product carrier can be realized in a conventional manner using a drive such as a motor.

The product carriers onto or into which the material was deposited with a depositing machine or an extruder described above, in particular product molds, are typically moved between subsequent processing devices by means of a chain or an endless belt, as described for example in US 5180602 A or DE 3740109 A1.

For the present invention, any conventional processing line may be used. Such lines may use conventional transport means such as chains or rails, and may involve modularly designed processing devices or processing lines that are arranged in the desired order without having a modular design.

According to one embodiment of the present invention, a modularly designed processing line may be used.

In PCT/EP2021/060776, a plant for the production of food products, in particular chocolate products, is described that comprises several modules in which the food products can be processed and/or transported, so as to provide for flexible industrial processing, adaptable equipment with easy handling and high hygienic standards.

According to a preferred embodiment of the present invention, said method is carried out in a plant comprising a plurality of modules in which product provided in said product carrier can be processed and/or transported, wherein at least some of the modules comprise a processing device, the modules each have a module frame, the length of the module being the same as or a multiple of a smallest module length, wherein the modules are designed in such a way that they can be connected or are connected to adjacent modules in the longitudinal direction, preferably on both sides, at least one module having at least one transport device for transporting said product carriers in a linear movement along a transport direction (T1, T2).

The processing device may be a mold warming station, a cooling station, a casting station, a sleeve forming station, a cold stamping station, an station for forming openings, a filling station, an insertion station, a vibration station, a lidding station, a licking station, a decorating station, a demolding station, a stacking and/or unstacking station, a spraying station, a printing station, a packaging station, preferably along with alignment of the products in a packaging in a controlled manner for optimal packaging and/or stacking (preferably with the aid of a robot being guided by a camera system), a film application station, a stamping station and/or a control station.

According to a preferred embodiment, modules are used. Those modules may comprise a module frame. The length of various modules (the length of the respective module frame including a certain tolerance length) is preferably set such that longer modules have a length corresponding to multiples of the length of the shortest module also designated as base length) in the plant. The multiple, may be one-fold, two-fold, three-fold or more. The tolerance length is used to compensate for productionrelated fluctuations in the manufacture of the module frames, usually welded constructions. The tolerance length is preferably about one hundredth of the smallest module length.

For example, a module having the base length can accommodate up to three product carriers, while a module having double the base length can accommodate up to seven product carriers.

The modules can be arranged in one length direction on a grid, which makes it easier to change the arrangement and interchange modules. In particular, the module frames are essentially of the same design, so that it is in principle irrelevant for the assembly which module follows which. When the plant is rearranged, there is no need for time-consuming planning and installation work.

The modules in this embodiment may be designed in such a way that they can be connected or attached to neighboring modules in the longitudinal direction, preferably on both sides.

Connectable means that adjacent modules can be brought into direct contact and/or can be brought into functional contact so that product carriers can be passed from one module directly to the other module.

The modules are preferably arranged lengthwise one after the other, so that at least some of the modules form a row along which the product carriers are transported.

Preferably, another part of the modules forms a second row, so that product carriers are transported along the first row to the end of the row and can be transported back again via the other row of modules.

In an advantageous embodiment, the plant has rails with a rail profile that can be fixed to the floor. The rails preferably have a convex rail profile in a cross-section perpendicular to the direction of travel. Rails with a convex profile meet the particular hygienic requirements that exist in the production of food products. A convex profile is easy to clean and has no pockets in which residues of food mass or other contaminants could collect.

Accordingly, in this embodiment the modules include wheels having a wheel profile complementary to the rail profile so that the wheels can roll on the rails. Preferably, each module has four or eight wheels.

The modules can be placed on the rails in such a way that they can be moved in the direction of their longitudinal extension, i.e. they can be rolled.

In particular, the plant may comprise a pair of rails on which a row of modules can be arranged, or two pairs of rails on which two rows of modules can be arranged.

It should be noted that other transport systems than rails can also be used, for example chains.

The plant may comprise a forklift truck with which the modules can be brought into a selected order and, for example, placed on rails and removed therefrom. For this purpose, the module frames may comprise support devices on which the forklift arms are guided and supported.

In a preferred embodiment of the plant, at least one module, preferably several modules, more preferably all modules, have a transport device for transporting product carriers in a linear movement along a transport direction, preferably along the length of the module.

The transport devices preferably provide a uniform or adaptable transport cycle. Preferably, the plant conveys 5-15, in particular 10, product carriers per minute.

The transport device transports a product carrier such as a mold, preferably several product carriers simultaneously, preferably through the module. The transport means are preferably arranged in the module frame in such a way that the transport means of a module can pick up product carriers such as molds from a first adjacently arranged module and deliver them to a second adjacently arranged module. In particular, at least some of the transport means may be arranged to form a transport line when the associated modules are arranged on rails and/or when the associated modules are arranged flush with each other so that one of the surfaces of the module frames spanned by length and height respectively lie in one plane.

For this purpose, the transport devices in each module can have the same distance to one of the surfaces spanned by the length and height of the module frame and to one of the surfaces spanned by the width and length of the module frame.

The transport device may be a chain, a pair of chains or a conveyor belt. The transport device can comprise transport rails. Preferably, the transport device may comprise a drive system which pulls or pushes the product carrier, in particular in the transport direction. The drive system can have drive parts that move together with the product carrier, at least in sections, such as chains with or without drivers, one or more belts with or without drivers, push bars with or without drivers or push tables with or without drivers.

Preferably the drive system may comprise two parallel push bars with drivers and an electric linear drive, such as an electro motor, for moving the push bars in and against a transport direction, as well as at least one vertical drive for a vertical movement of the push bars. The drive system moves the push bars in the transport direction and pulls or pushes the product carrier with the drivers, preferably a pair of drivers, in the transport direction.

On the side facing the transport device, usually on the underside, i.e. the side facing away from the product, the product carriers can have a stop surface facing in the opposite direction to the transport direction, against which the drivers rest during transport.

Preferably, the product carriers are symmetrical and have two stop surfaces so that it does not matter in which direction the product carriers are placed and conveyed on the plant.

According to a preferred embodiment, after the maximum movement of the push bars in the transport direction, the push bars are lowered via the vertical drive. A pneumatic drive can be provided as the vertical drive, which moves either the entire drive system with a pneumatic cylinder or each slide rail with its own pneumatic cylinder. The push bars may then be moved with the drive system against the direction of transport without taking the product carriers with them. The vertical drive then may move the push bars back up, after which the linear drive again ensures forward movement of the product carriers.

For mounting or removing a module, the drive system may be completely inside the module frame, so that removal from a plant or installation of a module in a plant can be carried out without any problems.

The drive system may comprise drive parts which project beyond the module frame during operation in and against the transport direction and which are movable with respect to the module frame in such a way that they can be displaced into an area within the module frame for removal or installation of the module. The drive system may have drive parts which are not only movable for transporting the product carriers, but are also displaceable, foldable, pivotable as a whole.

A chain or belt section that protrudes above the module frame during operation can be pivoted downwards, for example, for assembly purposes.

It is also possible that the plant comprises further modules in which the drive plant does not extend beyond the module frame even during operation in and/or against the transport direction.

The modules can have sliding surfaces on which the product carriers can be placed and on which the product carriers can be moved. In particular, two to eight sliding rails arranged parallel to each other are provided as sliding surfaces.

Modules in which pressure is applied to the product carriers may have more than two slide rails. The product carriers may have recesses on the side facing the drive system, typically the underside, which enclose the slide rails. The recesses may be arranged in end walls, which also form the stop surfaces for transport.

The slide rails may be arranged between the sliding rails in plan view.

The modules can be arranged in a row on a pair of rails. When a product carrier reaches the end of the row, it can either be removed from the line or returned above or below the modules.

Preferably, the product carriers are recirculated.

The system can also have at least two pairs of rails. In addition, the system preferably comprises at least one module that is designed as a traverse module. The traverse module connects two pairs of rails. The area of a production hall can be optimally utilized by connecting two pairs of rails with traverse modules to form a circulating production line.

The traverse module may comprise, for example, two module frames with the length of the base length, which stand on a respective pair of rails and are connected to each other. The traverse module may comprise a transport device for transporting the product carriers from one row of modules on the first pair of rails to the other row of modules on the second pair of rails. Preferably, the transport device of the traverse module also comprises a drive system that has two push bars arranged parallel to each other with drivers and an electric linear drive for moving the push bars in a transport direction, as well as at least one vertical drive for a vertical movement of the push bars. However, the transport direction for the traverse module is not in the longitudinal direction but perpendicular thereto.

The drivers may have a distance which corresponds to the width of the product carriers, so that the product carriers do not have to be rotated. The product carriers can first be guided along a first module row, then pass via the traverse module to the second module row, be guided back via the second module row and, if necessary, pass via a further traverse module back to the first module row. The product carriers can thus move in a closed circuit.

The modules may each have at least one control unit which comprises interfaces for data transfer with control units of the neighboring modules. The control units of the modules can thus be connected in a ring or series connection or are connected in a ring or series connection.

Modules with different processing equipment can be placed in any order or swapped without having to reprogram a central controller. The modules can identify themselves to their neighbors, who can pass on this message, so that each module has information about the status of the plant.

In particular, the modules can have safety sensors and emergency switches. The ring or series connection can be designed in such a way that all modules react as soon as a module forwards safety-relevant data to the control units of the neighboring modules or receives data from them. Each module will switch off its motors and pneumatic drives if necessary.

The modules can therefore be organized according to a decentralized safety concept.

In an advantageous embodiment of the plant, the plant has a central plant control, and the modules each have an individual control unit. The central plant control can be connected to the control units of the modules or is connected to them in a way that enables data exchange. In particular, the central plant control is designed to register the presence of the modules and/or to check the presence and/or to automatically detect the module sequence. Alternatively, the central plant control can comprise an input unit with which the sequence of the modules can be entered.

Each module can report to a line controller via DHCP and send an identification. Via SNMP, the line controller can query the switches of the modules to identify neighboring modules. The line controller can then index the modules according to the physical arrangement and send this information, including the IP addresses of the respective neighboring modules, back to all modules.

The recipe for the production of the food product can then be sent to the modules via the line controller.

The line controller can display the production sequence in a virtual line and the modules can always report their current status.

The plant is therefore able to organize itself, which makes new installations and conversions easier.

Typically, in addition to the modules, the plant may also include permanently installed elements. These may be connectable to modules on one or both sides. Typically fixed modules may include a cooling unit, a demolding station and a palletizing station.

In the cooling unit, the finished product cools down to a temperature below room temperature, for example. This can cause material to solidify.

In the demolding station the product may be removed from the product carrier.

Cooling unit and demolding station are usually arranged at the end of a module row. A buffer can be arranged between the cooling unit and the demolding station or after the demolding station, which can be used, for example, if the finished products cannot be taken over quickly enough from a packaging unit.

The empty product carriers can be passed on via a traverse module to a palletizing station, which supplies the modules with empty product carriers in the plant cycle. In the palletizing station, the empty product carriers can be checked, contaminated product carriers can be sorted out and, if necessary, fresh product carriers can be inserted. The palletizing station can have an industrial robot for transferring the product carriers.

The fixed elements can also have a transport plant which can be connected to the transport plant of the modules and/or a transport device with a drive plant which has two push bars arranged parallel to each other with drivers and an electric linear drive for moving the push bars in a transport direction, as well as at least one vertical drive for a vertical movement of the push bars.

The fixed elements can each have a control unit that can be connected to the control units of the modules in a ring or series circuit.

According to one embodiment of the present invention, the plant may comprise as at least one module a depositing machine as described above as processing device. The depositing machine delivers material to the product carrier. Said depositing machine has been described above in detail.

Said module may comprise a 3D drive device for a three-dimensional movement of the product carrier, in particular a robot or a combination of a linear drive system and a lifting table. The product carrier can then be moved, for example, under the dispensing nozzle during the dispensing of a liquid food product. This can be used to achieve uniform filling of molds or to create a pattern. In the module, the product carriers can be transferred from a linear transport system, in particular as described above, to the 3D drive device and delivered again from the 3D drive device to a linear transport system.

With the plant described above, it is possible to perform the various steps of the method of the present invention in different modules that may be conveniently and readily combined with each other. For example, if steps a) to d) of the method of the present invention are to be repeated, it is possible to quickly insert additional deposition or cooling modules in the row of modules of the plant.

The conditions under which the steps of the method of the present invention are to be carried out are known and depend on the exact nature of the material to be manufactured.

With the method of the present invention, it is possible to manufacture products that imitates properties of meat, poultry, fish, seafood, dairy products such as cheese or yoghurt, or products derived therefrom, and preferably have a desired layered structure.

Accordingly, the present invention is also related to a product that imitates properties of meat, poultry, fish, seafood, dairy products such as cheese or yoghurt, or products derived therefrom, obtainable by the method of the present invention, wherein said product is derived from a raw material comprising a protein, preferably a vegetable protein, insect protein, cell protein including single cell protein, such as of yeast, bacteria, microalgae, fungi, fermented products, mold and the like, or a mixture of different proteins, wherein the protein content in the dry raw materials is 35 to 90%, preferably greater than 50 % and is particularly preferably in the range from 60 % to 90 %, wherein said product preferably has a layered structure.

According to the present invention, this product is made from a raw material that comprises a protein, preferably a vegetable protein, insect protein, cell protein, such as of yeast, bacteria, microalgae, mold and the like, or a mixture of different proteins. This also encompasses embodiments in which the raw material contains a protein or constitutes a protein source.

Plants are preferably used as protein sources, for example, legumes (such as peas, lupins or beans, for example, fava beans), cereals (such as wheat, soybeans, rapeseed or sunflowers), or algae. For example, insect proteins, cell proteins, especially from yeast, bacteria, microalgae, mold and the like can also be used.

According to the present invention, the raw materials preferably comprise at least one component which has a fiber content. Pea fibers which have a fiber content of at least 50 % of their dry weight may be mentioned by way of example.

The raw materials typically also comprise a liquid. Water (possibly also coming from a preceding fermentation step), bouillon and/or an oil-containing substance such as an oil-containing flavoring component can be used as liquids.

According to the invention, the protein-containing raw materials are used in such an amount that the protein content in the dry raw material is greater than 50 % and is particularly preferably in the range from 60 % to 90 %. Accordingly, any optional starch content (carbohydrate content) in the dry raw material is no more than 50 %, preferably in the range from 5 to 30 %.

In addition, additives commonly used for the production of alternative meat products can be added. For example, salts such as sodium chloride, pH regulators, gelling agents such as Konjac gum, fats, oils or other lipids, or compounds that cause adhesion of layers of raw materials, such as enzymes (transglutaminase), Ca²⁺ or Mg²⁺-ions in the form of suitable compounds, for example CaCl₂, or a maltodextrin solution that is sticky when heated, but then solidifies the two layers together upon cooling, can be added, preferably in an amount of 0.1 to 10 % by weight, based on the total weight of all dry raw materials.

One or more of the raw materials can be preconditioned before any dosing and depositing step of the method of the present invention. The residence time of the protein matrix in the process, in particular if dosing and deposition is performed by extrusion, can be influenced in this way. It is currently assumed that a longer residence time leads to an improved fibrous protein structure, since an increased number of cross-linked filaments are then produced during extrusion. According to the invention, the residence time in the preconditioner is preferably 3 to 600 s, particularly preferably 3 to 60 s, particularly preferably 5 to 15 s.

The metered raw materials are mixed with one another before any dosing and depositing step of the method of the present invention.

As used herein, the term "fish and seafood" includes fish, including both freshwater fish and saltwater fish, as well as other marine animals (seafood), such as shrimps.

According to the present invention, the term "poultry" comprises all kinds of domesticated birds, such as chicken, duck, goose or turkey. More specifically, according to the present invention the term "poultry" refers to the parts of those animals that are typically consumed as food by humans.

According to the present invention, the term "products derived therefrom" refers to products that are obtained by processing any of meat, poultry, dairy products such as cheese or yoghurt, fish or seafood into a specific form. An example are strips of meat.

According to the present invention, the products obtained by the method of the present invention are preferably selected from the group consisting of food products intended for consumption by humans, and feed or pet food products intended for consumption by animals.

According to a preferred embodiment, in the method according to the invention wet texturates may be used as material in any of the deposition steps. A wet texturate is understood to mean a material in which the solids content is in the range from 20 wt.-% to 60 wt.-%, preferably in the range from 30 wt.-% to 50 wt.-%. The remaining 80 to 20 wt.-%, preferably 70 to 45 wt.%, especially preferred 65 to 55 wt.-%, are one of the liquids mentioned above, preferably water. For wet texturates, it has proven to be advantageous when the protein content in the dry raw materials is greater than 50 wt.-% and is particularly preferably in the range from 60 wt.-% to 90 wt.-%. Preferably, the resulting product has a protein content in the range from 15-30 wt.-%, preferably 19-23 wt.-%.

According to another embodiment, in the method according to the invention dry texturates may be used as material in any of the dosing and deposition steps. A dry texturate is understood to mean a material in which the solids content is in the range from 60 wt.-% to 90 wt.-%, preferably in the range from 65 wt.-% to 75 wt.-%. For dry texturates, it has proven to be expedient when the protein content in the dry raw materials is in the range from 35 wt.-% to 90 wt.-%.

All above indicated wt.-% are with respect to the entire amount of the respective texurate.

With the method described in WO 2021/032866 A1, a foamed extrudate may be obtained as material for the dosing and depositing step(s). According to a preferred embodiment of the present invention where a foamed product is used in any of the dosing and depositing steps of the present method, and wherein said foamed product is obtained by introduction of a gas described above, the dispersed gas fraction and the gas bubble size / size distribution have a quantitative influence on the texture properties (for example, "bite and chewing properties" such as tenderness, hardness, chewability) and make it possible to adapt these sensory properties by adapting the structural parameters to the dispersed gas phase. It is assumed that an increase in the gas fraction (up to a matrix-specific critical value) and a reduction in the bubble size (with a constant gas volume fraction) lead to a stiffening of the structure. This leads to an increase in hardness, which is expressed by the maximum force required to start the structural break when cutting/biting, but increases the deformation required for the break and thus influences the chewability. Accordingly, the foaming of the matrix expands the spectrum of tools for adapting, for example, meat-analog bite/chewing properties from chicken to beef and beyond.

Also, the foaming provides for pores in the extrudate into which additional material may be inserted.

According to the invention, protein-containing products (that is, products having a protein content of more than 50 % dry weight) can be produced which correspond, for example, to meat products in their texture, color and bite, more than protein-containing foods from the prior art. However, according to the present invention also other protein-containing products (having a protein content of more than 50 % dry weight) can be provided. For example, mousse-like food products with a higher structural stability than real mousse can be obtained.

The product obtainable with the method of the present invention preferably has a textured structure obtainable by deposition of the material(s) in a desired pattern. This has been described above. Since the outlet of the depositing machine or extruder can be moved freely relative to a product carrier, the patterns that may be achieved with the method of the present invention are infinite. The method of the present invention allows the production of a product that imitates properties of meat, poultry, fish, seafood, dairy products such as cheese or yoghurt, or products derived therefrom, in almost any desired shape and texture.

As another example, the product may have a three-dimensional structure, preferably ball-like structure, with a cavity in its interior that may comprise the cellular medium discussed above. Such products may be formed using a double-mold discussed above.

The present invention is described below in more detail with reference to non-limiting exemplary embodiments and drawings in which:
- Fig. 1: shows a schematic sectional illustration of depositing machine suitable for the present invention;
- Fig. 2: shows a first example of a depositing assembly suitable for the present invention in a schematic sectional illustration;
- Fig. 3: shows a second example of a depositing assembly suitable for the present invention in a schematic sectional illustration;
- Fig. 4: shows a third example of a depositing assembly suitable for the present invention in a schematic sectional illustration;
- Fig. 5: shows a fourth example of a depositing assembly suitable for the present invention in a schematic sectional illustration;
- Fig. 6: shows a schematic representation of a plant according to the invention in plan view.
- Fig. 7: shows a schematic representation of an embodiment of the manufacturing process according to the invention.
- Fig. 8: shows a schematic representation of an embodiment of a layer product according to the invention.

In the drawings, same reference numbers denote the same components.

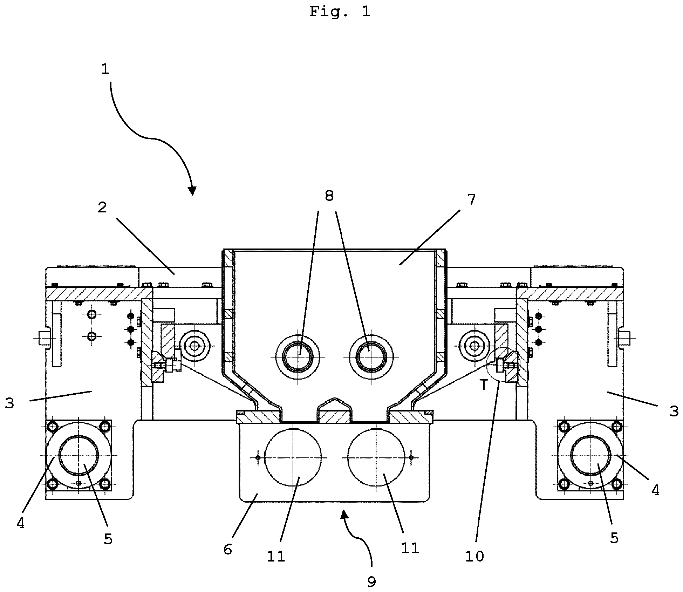

Fig. 1 shows a schematic sectional illustration of depositing machine 1 suitable for the present invention.

The depositing machine 1 has a machine frame 2 which carries at least one motor (not shown) and comprises two arms 3 which project along respective parallel horizontal axes 4, with respect to the floor on which the depositing machine 1 is provided, and said arms 3 are equipped with actuation means 5.

The depositing machine 1 has a depositing assembly 6 for delivering a material to be molded, for example a foodstuff mass, from the depositing machine 1 to molds (not shown) positioned below the depositing assembly 6. Said depositing assembly 6 is disposed below a tank 7 for storing the material to be molded. The tank 7 is equipped with a stirring device 8.

In the present exemplary embodiment, the tank 7 and the depositing assembly 6 form part of a module 9 which as a component of the depositing machine 1 is removable in one piece from the frame 2.

The module 9 is fastened to the machine frame 2, for example by means of a plug-in connection 10 which is disposed in a substantially horizontal manner, with respect to the floor on which the depositing machine 1 is provided.

The module 9 is equipped with a further frame 12 which in the present example is fastened to the machine frame 2 by way of a form-fitting bolt connection.

The depositing assembly 6, on both sides facing the arms 3, comprises a row of horizontal pistons (not shown in Fig. 1) which perform an intake cycle, so as to draw product from the tank 7, and an exhaust cycle, so as to expel the acquired product into molds (not shown) arranged below the depositing assembly 6. The depositing assembly 6 moreover comprises, on each side, a dispensing device 11 which rotates between a first position, so as to receive the product that has been acquired by the pistons (not shown in Fig. 1), and a second position, which enables an outflow of the product that is expelled by the pistons (not shown in Fig. 1) into molds (not shown) arranged below the depositing assembly 6.

The depositing assembly 6 is releasably connected to a motor (not shown), attached to the machine frame 2, for rotating the dispensing devices 11. The actuation means for moving the pistons (not shown) are likewise releasably connected to the pistons.

The depositing assembly 6 can be inserted into and moved out of the machine frame 2. This is known from WO 2015/162114 A1 and not described in detail here.

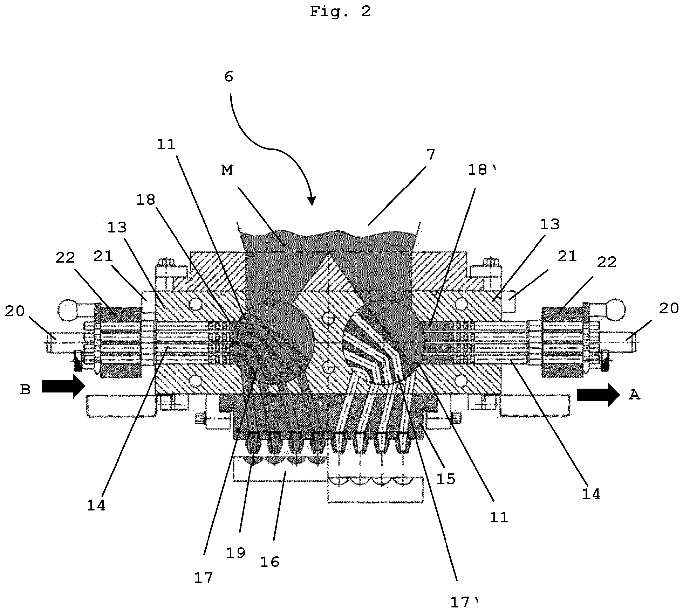

Fig. 2 shows a first example of a depositing assembly 6 suitable for the present invention in a schematic sectional illustration. In detail, Fig. 2 shows a depositing assembly 6 having a doublesided piston plant. In a piston block 13, there are arranged the dispensing devices 11 in a rotatable manner. Preferably, the dispensing devices 11 are rotary valves. Also, in the piston block 13, there are arranged pistons 14 that can be moved horizontally, with respect to the floor on which the depositing machine 1 comprising the depositing assembly 6 is provided. In detail, the piston block 13 is interspersed by several parallel reciprocating piston boreholes 18, 18', which each accommodate one reciprocating piston 14, and by two parallel boreholes arranged at a right angle relative to the reciprocating piston boreholes 18, 18', which each incorporate a dispensing device 11 interspersed by dispensing channels 17, 17'.

A nozzle plate 15 is provided below the depositing assembly 6.

The right dispensing device 11 in FIG. 2 is shown during an aspiration phase, in which material M is drawn out of the tank 7. The left dispensing device 11 in FIG. 2 is shown during the metering phase, in which the previously drawn material M is metered through the nozzle plate 15 into cavities 19 of a mold 16. The mold 16 can be lifted for injection purposes and lowered after injection of material M into the cavities 19 has been completed.

In the aspiration phase shown on the right side of Fig. 2, the dispensing device 11 is rotated into a position where the tank 7 is connected with the reciprocating piston boreholes 18', but not with the dispensing channels 17'. The pistons 14 are moved to the right, as indicated by arrow A, and therewith draw material M into the reciprocating piston boreholes 18'.

Subsequently, as shown on the left side of Fig. 2, the dispensing device 11 is rotated into a position where the tank 7 is no longer connected with the reciprocating piston boreholes 18. Rather, the reciprocating piston boreholes 18 are connected with the dispensing channels 17. The pistons 14 are moved to the right, as indicated by arrow B, and therewith push material M from the reciprocating piston boreholes 18 through the dispensing channels 17 into cavities 19 of the mold 16.

The pistons 14 are preferably connected to a coupling end 20 by means of a reciprocating piston drive (not shown) such that the pistons may be collectively moved in a reciprocal manner, for example by a gear rack or an eccentric drive. For removal, the piston plate has to be separated from the drive means, and the dispensing device 11 has to be separated from the motor (not shown).

The aspirating stroke A and metering stroke B of the reciprocating pistons 14 is set, for example, using stops or spacers 21 incorporated in the piston block 13, which interact with a guide block 22 that guides several reciprocating pistons 14. The dispensing devices 11 are made to turn by a rotating piston drive (also not shown).

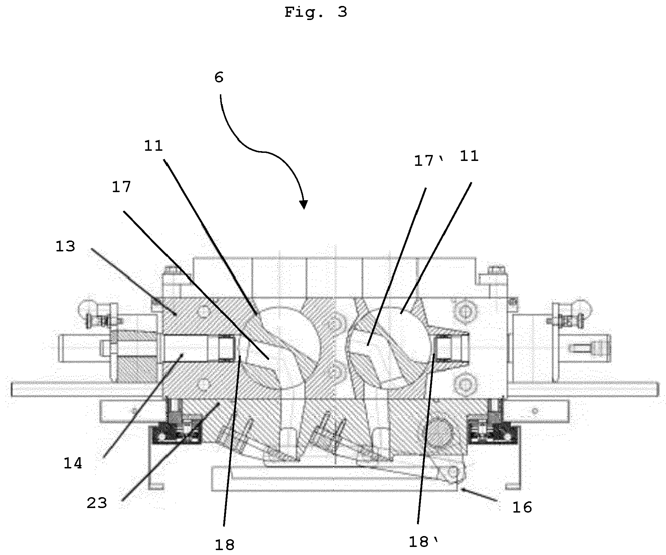

Fig. 3 shows a second example of a depositing assembly 6 suitable for the present invention in a schematic sectional illustration. In detail, Fig. 3 shows a depositing assembly 6 having a piston block 13 in which rotatable dispensing devices 11 and horizontal pistons 14 are disposed. The operation principle is the same as for the dispensing device 11 shown in Fig. 2. A blade block 23, by way of which material M may be cleanly metered into a mold 16, is disposed below the depositing assembly 6.

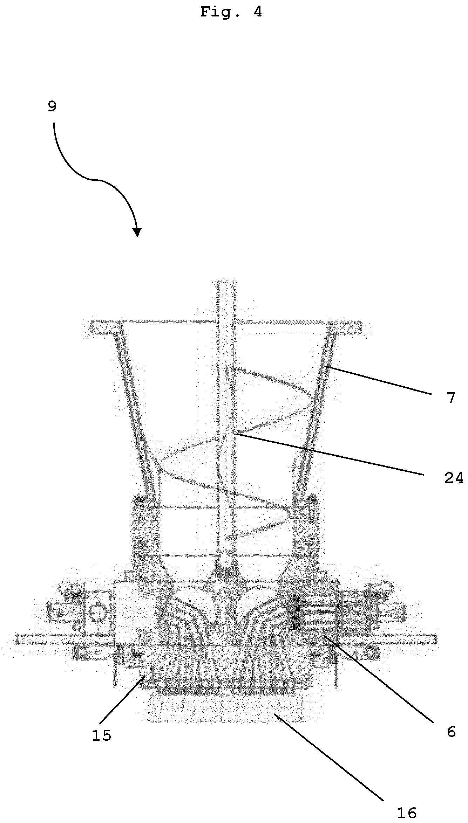

Fig. 4 shows a second example of a depositing assembly 6 suitable for the present invention in a schematic sectional illustration. In detail, Fig. 4 shows a module 9 having a tank 7 which is embodied as a conical mass container and on which a vertically aligned stirring device 24 having a screw conveyor is provided. Modules of this type are suitable for conveying viscous materials. The operation principle is the same as for the dispensing device 11 shown in Fig. 2.

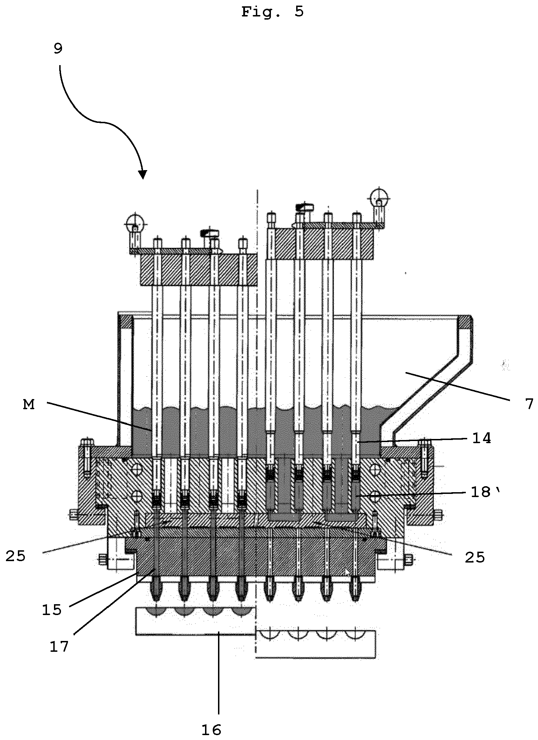

Fig. 5 shows a fourth example of a depositing assembly 6 suitable for the present invention in a schematic sectional illustration. In detail, Fig. 5 shows a module 9 having a tank 7 in which vertical metering pistons 14 are disposed. A sliding plaque 25 which is moved, for example, by a servo motor (not shown), may be moved to a metering position (left side) or to a draw-in position (right side). In the draw-in position (right side of Fig. 5), the pistons 14 are moved out of the boreholes 18' in which they are provided, thus allowing material M to be drawn into said boreholes 18'. The sliding plaque 25 is in a draw-in position, in which it locks the boreholes 18' at their lower ends.

In the metering position (left side of Fig. 5), the pistons 14 are moved into the boreholes 18 in which they are provided. The sliding plaque 25 is in a metering position, in which it connects the boreholes 18 at their lower ends with dispensing channels 17 in a nozzle plate 15. By the movement of the pistons 14 into their respective boreholes 18, the material M drawn into said boreholes 18 is pushed through the dispensing channels 17 into cavities 19 of a mold 16. The mold 16 can be lifted for injection purposes and lowered after injection of material M into the cavities 19 has been completed.

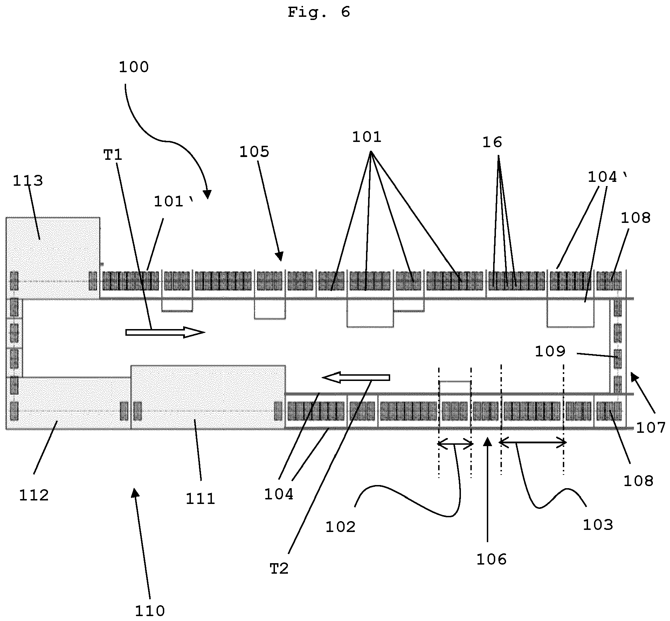

Fig. 6 shows a schematic representation of a plant 100 according to the invention in plan view.

The plant 100 comprises modules 101 in which the products, for example food products, can be processed and/or transported, preferably in product carriers such as molds 16. The modules 101 have a short module length 102 or a length 103 corresponding to a double short module length 102. The modules 101 with a short module length 102 can accommodate three product carriers such as molds 16, while the modules 101 with a length 103, that is, a double short module length, can accommodate seven product carriers such as molds 16.

The plant 100 comprises rails 104, 104', and the modules 101 are each arranged in a module row 105, 106 on a first pair of rails 104 and a second pair of rails 104'. The modules 101 can be connected to neighboring modules 101 on both sides in the longitudinal direction, which corresponds to the transport direction T1, T2, so that no intermediate or transition elements are necessary in the module rows 105, 106.

The module rows 105, 106 are connected by a traverse module 107. The traverse module 107 has one or more module frames 108, preferably two module frames 108, of short module length 102, which stand on the opposite pairs of rails 104, 104', and at least one traverse element 109 which connects the module frames 108 of the traverse module 107.

While the product carriers such as molds 16 are transported in the module rows 105, 106 along opposite transport directions T1, T2, the transport in the traverse module 107 is perpendicular to the transport directions T1, T2.

The plant 100 includes fixed elements 110, namely a cooling station 111, a demolding station 112 and a palletizing station 113.

In the demolding station 112, the products are loaded from the product carriers such as molds 16 onto a belt which leads out of the demolding station 112 to a packaging station (not shown). The empty product carriers such as molds 16 are fed to the palletizing station 113. There, for example an industrial robot removes soiled product carriers and places them on a designated pallet, which can be moved out of the palletizing station 113 for cleaning.

The palletizing station 113 also stores stacks of fresh product carriers. The industrial robot can remove product carriers from these stacks as required.

From the palletizing station 113, empty product carriers are fed into a first module 101'. According to this preferred embodiment, the first module 101' contains a depositing machine 1.

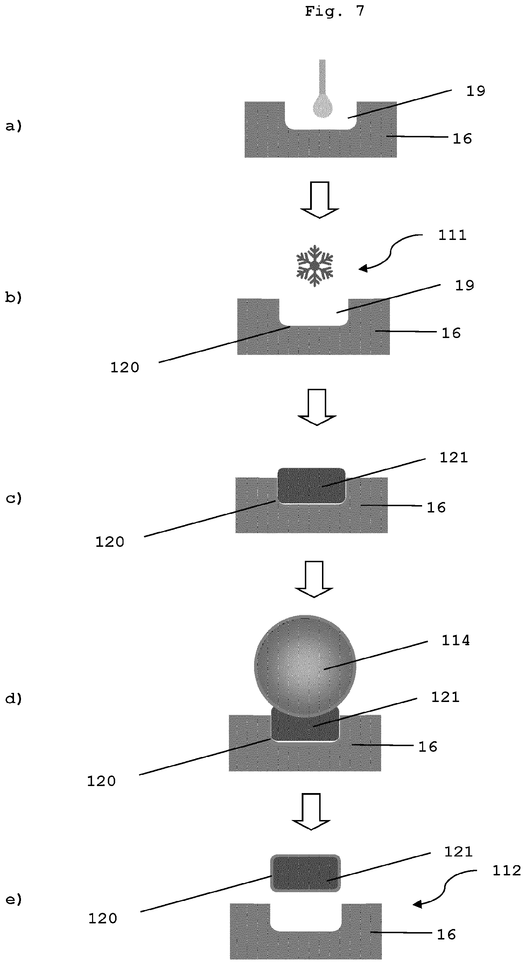

Fig. 7 shows a schematic representation of an embodiment of the manufacturing process according to the invention. In step a), into a cavity 19 of a mold 16 described above, a material layer 120 is dosed and deposited. This can be performed, for example, with a depositing machine 1 described above. Alternatively, the material forming the material layer 120 can be prepared in an extruder and dosed and deposited directly from the extruder into the cavity 19.

In step b), said material layer 120 is solidified. Preferably, this is achieved by cooling (up to freezing) the layer 120. According to a preferred embodiment of the present invention, the mold 16 is conveyed from step a) into a cooling station 111 of the plant 100 of Fig. 6, where step b) is performed.

If more than one material layer 120 is to be dosed and deposited, steps a) and b) can be repeated. Preferably, this can be achieved by providing an appropriate sequence of depositing machines 1 and cooling stations 111 in plant 100 of Fig. 6, and conveying the mold 16 through that sequence of modules.

In step c), a material core 121 is dosed and deposited into the cavity 19 with the solidified material layer 121. This can be performed, for example, with a depositing machine 1 described above. Alternatively, the material forming the material core 121 can be prepared in an extruder and dosed and deposited directly from the extruder into the cavity 19.

In step d), compression of the product obtained in step c) is performed by a compression module 114. Preferably, compression is performed simultaneously with cooling, so as to solidify the product consisting of the material layer 120 and the material core 121.

In step e), the finished product consisting of the material layer 120 and the material core 121 is removed from the cavity 19 of the mold 16, for example by an ejection module as a demolding station 112.

The process according to the present invention, as exemplified in Fig. 7, can be preferably performed in a plant 100 as shown in Fig. 6, wherein the following modules are provided in succession: A first module 101' containing a depositing machine 1, followed by a cooling station 111, followed by a second module 101' containing a depositing machine 1, followed by a compression module 114 and an ejection module as a demolding station 112.

With the process of the present invention, various kinds of differently structured and/or textured products can be obtained, not limited to the core-layer structure obtained in Fig. 7.

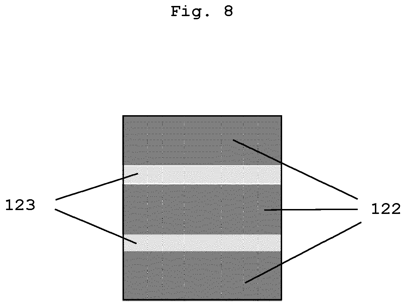

Fig. 8 shows a schematic representation of an embodiment of a layered product according to the invention. In said embodiment, layers 122 and 123 of different materials have been deposited successively. This can be achieved with the process according to Fig. 7, when in step a) only on the bottom of the cavity 19 a first material layer 122, made for example from a protein-containing composition, is dosed and deposited with the appropriate thickness, followed by solidifying step b). Next, step a) is repeated, but with dosing and deposition of a second material layer 123, made for example from a fat-containing composition, with the appropriate thickness, followed by solidifying step b). Steps a) and b) are then repeatedly performed until layers 122 and 123 have been dosed and deposited in the desired number and thickness. Step c) is then superfluous, and steps d) and e) can be performed directly.

## Claims

1. A method for the manufacture of a product that imitates properties of meat, poultry, fish, seafood, dairy products such as cheese or yoghurt, or products derived therefrom, comprising the steps:
a) dosing and depositing a first material onto a surface, preferably in a cavity (19), of a product carrier (16), preferably a mold, so as to obtain a first deposit (120, 122) in a desired shape;
b) solidifying said first deposit (120, 122) so that the first deposit has a self-containing structure;
c) optionally processing the first deposit (120, 122),
d) releasing said product from said product carrier(16), so as to obtain said product that imitates properties of meat, poultry, fish and seafood, and products derived therefrom;
wherein said first material comprises a protein, preferably a vegetable protein, insect protein, cell protein including single cell protein, such as of yeast, bacteria, microalgae, fungi, fermented products, mold and the like, or a mixture of different proteins, wherein the protein content in the dry raw materials is 35 to 90%, preferably greater than 50 % and is particularly preferably in the range from 60 % to 90 %.

2. The method according to claim 1, **characterized in that** the method comprises, before step b) or c), the steps of dosing and depositing a second material onto or into a product support, preferably into said cavity (19), of said product carrier (16), preferably a mold, so as to obtain a second deposit(121, 123) in a desired shape, wherein said step of dosing and depositing said second material is performed simultaneously with the step of dosing and depositing said first material, or after the step of depositing or solidifying said first deposit(120, 122), and optionally solidifying said second deposit (121, 123) together with or after said step of solidifying said first deposit (120, 122), so that the second deposit has a self-containing structure, wherein preferably said second material comprises a protein, preferably a vegetable protein, insect protein, cell protein including single cell protein, such as of yeast, bacteria, microalgae, fungi, fermented products, mold and the like, or a mixture of different proteins, wherein the protein content in the dry raw materials is 35 to 90%, preferably greater than 50 % and is particularly preferably in the range from 60 % to 90 %.

3. The method according to claim 1 or 2, **characterized in that** dosing and deposition of at least one of the first and second material is carried out with a depositing machine (1) having:
- at least one tank (7) which contains said material for deposition and which is equipped with a stirring device (8) for stirring said material in said tank (7);
- a depositing assembly (6) which is located below the tank (7) and comprises at least one row of pistons (14) which perform an intake cycle, so as to draw said material out of said tank (7), and an exhaust cycle, so as to expel the drawn material; and at least one dispensing device (11) which rotates between a first position, so as to receive the material that has been drawn by the pistons (14), and a second position which enables an outflow of the material that is expelled by the pistons (14);
- a motor for rotating the dispensing device (11);
- actuation means (5) for moving the pistons (14) in a reciprocal manner, wherein the actuation means (5) are releasably connected to the pistons (14); and
- a machine frame (2) which carries the motor and comprises two arms (3) which project along respective parallel horizontal axes (4) and are equipped with the actuation means (5);
wherein the tank (7) and the depositing assembly (6) form part of a module (9) which is removable in one piece from the frame (2), and the module (9) is releasably connected to the motor and is equipped with a further frame (12), and the further frame (13) in the machine frame (2) is fastened by way of a plug-in connection (10) which is disposed in a substantially horizontal manner.

4. The method according to claim 1 or 2, **characterized in that** dosing and deposition of at least one of the first and second material is carried out by extruding said material(s), preferably through a cooling die of an extruder while cooling the extrudate to a temperature of less than 100 °C, into said cavity (19).

5. The method according to any of the preceding claims, **characterized in that** said mold (16) is made of a food-grade material to which the material to be processed according to the present invention does not adhere, preferably a silicone material.

6. The method according to any of the preceding claims, **characterized in that** said dosing and deposition of at least one of the first and second material is carried out such that a desired pattern is formed.

7. The method according to any of the preceding claims, **characterized in that** said method is carried out in a plant (100) comprising a plurality of modules (101) in which product provided on or in a product support, preferably into a cavity (19), of said product carrier (16) can be processed and/or transported, wherein at least some of the modules (101) comprise a processing device (1, 111, 112, 113, 114, 115), the modules (101) each have a module frame (108), the length (103) of the module being the same as or a multiple of a smallest module length (102),
wherein the modules (101) are designed in such a way that they can be connected or are connected to adjacent modules (101) in the longitudinal direction, preferably on both sides, at least one module (101) having at least one transport device for transporting said product carriers (16) in a linear movement along a transport direction (T1, T2) .

8. The method according to claim 7, **characterized in that** said plant (100) comprises rails (104, 104') that are fixable on a floor and have a rail profile, in particular a pair of rails (104, 104') or two pairs of rails (104, 104'), and the modules (101) have wheels which have a wheel profile complementary to the rail profile.

9. The method according to claim 7 or 8, **characterized in that** said plant (100) comprises a drive system comprising two push bars arranged parallel to each other and having drivers, and an electric linear drive for moving the push bars in a transport direction (T1, T2), and at least one vertical drive for a vertical movement of the push bars.

10. The method according to any of claims 7 to 9, **characterized in that** the plant (100) comprises at least two pairs of rails (104, 104') and at least one module which is formed as a traverse module (107) and connects the two pairs of rails (104, 104').

11. The method according to any of claims 7 to 10, **characterized in that** the plant (100) comprises as processing device (1, 111, 112, 113, 114) a depositing machine (1) according to claim 2 or an extruder, a cooling station (111), a compression module (114), a demolding station (112), and a compression module (114).

12. A product that imitates properties of meat, poultry, fish and seafood, and products derived therefrom, obtainable by the method according to any one of claims 1 to 9, wherein said product is derived from
a raw material comprising a protein, preferably a vegetable protein, insect protein, cell protein including single cell protein, such as of yeast, bacteria, microalgae, fungi, fermented products, mold and the like, or a mixture of different proteins, wherein the protein content in the dry raw materials is 35 to 90%, preferably greater than 50 % and is particularly preferably in the range from 60 % to 90 %, preferably wherein said product has a layered structure.

13. The product according to claim 12, **characterized in that** the product has a protein content in the range from 15-30 wt.-%, preferably 19-23 wt.-% and a liquid content, preferably water content, of 45-70 wt.-%, preferably 55-65 wt.-%.

14. The product according to any of claims 12 or 13, **characterized in that** the product has a textured structure obtainable by deposition of the material in a desired pattern.
